# EUROPÄISCHE PATENTSCHRIFT

(11) **EP 3 615 841 B1**
(45) Veröffentlichungstag und Bekanntmachung des Hinweises auf die Patenterteilung: **22.09.2021**
(21) Anmeldenummer: 19726632.3
(22) Anmeldetag: 21.05.2019
(51) Int. Cl.: F16G 13/06, F16G 15/02

(54) **GELENKKETTE**
LINK-PLATE CHAIN
CHAÎNE ARTICULÉE

(30) Priorität: 19.07.2018 DE 102018117503
(43) Veröffentlichungstag der Anmeldung: 04.03.2020
(73) Patentinhaber: KettenWulf Betriebs GmbH, 59889 Eslohe-Kückelheim (DE)
(72) Erfinder: WULF, Tobias, 59889 Eslohe (DE); HEBBECKER, Thomas, 57399 Kirchundem (DE); SILBERG, Kai, 57392 Schmallenberg (DE)
(74) Vertreter: Schäperklaus, Jochen
(86) Internationale Anmeldenummer: PCT/EP2019/063147
(87) Internationale Veröffentlichungsnummer: WO 2020/015893

(56) Entgegenhaltungen:
- WO-A1-2017/089478
- DE-A1- 3 429 723
- US-A- 5 362 282
- US-B1- 6 270 173

## Beschreibung

Die vorliegende Erfindung betrifft eine Buchsenförderkette gemäß dem Oberbegriff des Anspruchs 1.

Mit Buchsenketten sollen alle Kettenausführungen bezeichnet werden, die ein Kettengelenk aus einem Bolzen und einer Gelenkbuchse umfassen. Mit Buchsenförderketten sollen alle Kettenausführungen bezeichnet werden, die Buchsenketten sind und die Aufgabe haben, Güter aller Art in fördertechnischen Anlagen zu bewegen beziehungsweise zu fördern und die dazu erforderliche Gesamtkettenzugkraft zu übertragen. Buchsenförderketten können Rollen aufweisen, müssen aber keine Rollen aufweisen. Buchsenförderketten können Befestigungsteile für den Anbau zusätzlicher Bauteile aufweisen, müssen aber keine Befestigungsteile aufweisen. Buchsenförderketten können beispielsweise als Fahrtreppenkette oder als Palettenkette oder als Stufenkette oder als Kratzerkette verwendet werden. Grundsätzlich sind verschiedenste Anwendungen von Buchsenförderketten in allen industriellen Bereichen möglich.

Ketten finden häufig in Anlagen und Maschinen Anwendung, in denen ein umlaufender und endloser Kettenverlauf vorgesehen ist. Somit besteht die Notwendigkeit, die Kette während des Einbaus in solche Anlagen oder Maschinen an mindestens einer Stelle zu schließen und zwei Kettenenden miteinander zu verbinden.

Wenn die Ausführung der Ketten jedoch sehr groß ausfallen und Gewichte von beispielsweise 100 kg pro Meter erreicht werden, besteht häufig die Notwendigkeit, die Kette in mehreren Teilstücken zu fertigen, zu liefern und auf der Baustelle zu montieren. Somit ist es üblich, dass mehrere Kettenstücke miteinander verbunden werden müssen. Dies wird bei Buchsenketten in der Regel durch ein sogenanntes Schlussglied oder Verbindungsglied erreicht. Hierbei handelt es sich um ein mitgeliefertes Außenglied, das beispielsweise so vormontiert ist, dass zwei Bolzen bereits mit einer Außenlasche verbunden sind.

Auf der Baustelle werden dann beispielsweise die beiden vormontieren Bolzen durch die jeweiligen Enden beziehungsweise Buchsen von zwei Kettensträngen geführt und die fehlende, als Decklasche bezeichnete Außenlasche mittels einer Montagepresse montiert. Dieser Prozess ist theoretisch relativ einfach durchführbar.

In der Praxis kann der Prozess jedoch durch eine Vielzahl von Einflüssen deutlich erschwert werden. Zu diesen Einflüssen zählen ein hohes Kettengewicht sowie auch das Gewicht der Montagepresse, die teilweise deutlich über 100 kg schwer sein kann. Weiterhin können Fluchtungsfehler der Kettenstränge in der Anlage die Verbindung der Kettenstränge erschweren. Weiterhin müssen eventuell empfindliche Dichtungsanordnungen innerhalb des Kettengelenkes unter Baustellenbedingungen angebracht und positioniert werden. Auch Umgebungsbedingungen auf der Baustelle, wie beispielsweise das Wetter, eine große Bauwerkshöhe, eventuelle Strahlungshitze und Verschmutzungen, können die Verbindung deutlich erschweren.

Eine Buchsenförderkette der eingangs genannten Art ist aus der WO 2007/147519 A1 bekannt. Die darin beschriebene Buchsenförderkette umfasst eine Mehrzahl von Außenlaschen, von denen jeweils zwei in Kettenquerrichtung einander gegenüberliegen, eine Mehrzahl von Innenlaschen, von denen jeweils zwei in Kettenquerrichtung einander gegenüberliegen, eine Mehrzahl von Gelenkbolzen, die jeweils drehfest mit zwei sich in Kettenquerrichtung einander gegenüberliegenden Außenlaschen verbunden sind, sowie eine Mehrzahl von Gelenkbuchsen, die jeweils drehfest mit zwei sich in Kettenquerrichtung einander gegenüberliegenden Innenlaschen verbunden sind, wobei jeweils eine Gelenkbuchse einen Gelenkbolzen zumindest abschnittsweise umgibt und mit dem Gelenkbolzen ein Gelenk bildet. Für das Verbinden von Kettensträngen sind Einheiten von Außenlaschen mit jeweils einem daran vormontierten Bolzen vorgesehen. Eine ähnliche Buchsenförderkette ist aus der WO2017/089478 bekannt.

Das der vorliegenden Erfindung zugrundeliegende Problem ist die Schaffung einer Buchsenförderkette der eingangs genannten Art, die das Verbinden von Kettensträngen erleichtert.

Dies wird erfindungsgemäß durch eine Buchsenförderkette der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass mindestens zwei der Laschen, insbesondere zwei einander gegenüberliegende Laschen, jeweils zwei Laschenteile aufweisen, die im Gebrauchszustand der Buchsenförderkette miteinander verbunden sind, wobei jeweils mindestens ein Bolzen vorgesehen ist, der die Laschenteile miteinander verbindet. Im Gegensatz zu aus dem Stand der Technik bekannten Systemen erfolgt erfindungsgemäß die Verbindung der miteinander zu verbindenden Kettenstränge nicht im Bereich der Gelenke, sondern in den Laschen. Dadurch kann eine sehr einfache Montage der Verbindungsglieder beziehungsweise der Laschenteile aneinander erreicht werden. Es wird kein aufwändiges Werkzeug benötigt. Es kann insbesondere auf die aufwändigen Montagepressen verzichtet werden. Trotzdem kann die Belastbarkeit der Laschenteile und der Verbindung zwischen den Laschenteilen der Ausführung der jeweiligen Buchsenförderkette flexibel angepasst werden und rechnerisch relativ einfach bestimmt werden, beispielsweise durch Berücksichtigung reiner Scherung und reiner Zugspannung. Die für die Funktionalität der Buchsenförderkette wesentlichen Kettengelenke eines Kettenstrangs können sämtlich herstellerseits montiert werden. Dadurch werden insbesondere Presssitze und Dichtungen einheitlich ausgeführt. Weiterhin kann die Schmierung der Gelenke prozesssicher herstellerseits durchgeführt werden. Auch die Umgebungsbedingungen der Baustelle haben dementsprechend keinen Einfluss auf die Gelenke oder andere Kettenbauteile, so dass Beschädigungen und Verschmutzungen weitgehend vermieden werden können. Weiterhin können die Bruchkräfte der Verbindungsglieder so ausgelegt werden, dass sie keine Schwächung der gesamten Kette darstellen.

Es kann vorgesehen sein, dass die durch den mindestens einen Bolzen hergestellte Verbindung eine mehrschnittige Bolzenverbindung ist. Durch eine Erhöhung der Anzahl der Scherflächen kann die Belastbarkeit der Verbindung der beiden Laschenteile erhöht werden. Neben der Anzahl der Scherflächen am Bolzen tragen auch der Durchmesser des Bolzens, die Laschenhöhe, die Laschenstärke, die Wahl der Werkstoffe sowie gegebenenfalls eine Wärmebehandlung der Verbindungsbauteile, vorzugsweise eine Wärmebehandlung des Bolzens und der Laschenbohrungen, zur Belastbarkeit der Verbindung bei. Es besteht durchaus auch die Möglichkeit mehrere, insbesondere in Laschenlängsrichtung zueinander beabstandete, Bolzen vorzusehen, um die Anzahl der Scherflächen und damit die Belastbarkeit zu erhöhen.

Es kann vorgesehen sein, dass das erste der Laschenteile mindestens einen mit einer Bohrung versehenen ersten Abschnitt, vorzugsweise mehrere, zueinander beabstandete erste Abschnitte, aufweist, der sich im Gebrauchszustand der Buchsenförderkette endseitig in Richtung auf das zweite der Laschenteile erstreckt, und dass das zweite Laschenteil mindestens einen mit einer Bohrung versehenen zweiten Abschnitt, vorzugsweise mehrere, zueinander beabstandete zweite Abschnitte, aufweist, der sich im Gebrauchszustand der Buchsenförderkette endseitig in Richtung auf das erste Laschenteile erstreckt, wobei im verbundenen Zustand der Laschenteile der mindestens eine erste Abschnitt den mindestens einen zweiten Abschnitt überlappt und wobei sich der mindestens eine Bolzen durch die Bohrungen des mindestens einen ersten und des mindestens einen zweiten Abschnitts hindurcherstreckt. Auf diese Weise werden die Laschenteile lediglich durch den Bolzen miteinander verbunden. Je nach Größe der zu übertragenden Kraft kann die Anzahl der einander überlappenden Abschnitte beziehungsweise die Anzahl der Scherflächen größer oder kleiner gewählt werden.

Dabei kann sich der mindestens eine Bolzen im Gebrauchszustand der Buchsenförderkette in einer Richtung durch die Bohrungen der einander überlappenden Abschnitte erstrecken, die zu der Laschenlängsrichtung und zu der Kettenquerrichtung senkrecht ist. Dadurch kann eine sehr belastbare Verbindung realisiert werden. Alternativ sind auch Bolzen möglich, die sich schräg durch die Laschenteile erstrecken.

Es besteht die Möglichkeit, dass der mindestens eine Bolzen Absätze aufweist und/oder dass der mindestens eine Bolzen als Spannstift und/oder als Passschraube ausgebildet ist. Das Versehen des Bolzens mit Absätzen kann unabhängig von der Ausführung der Passung die Montage erleichtern. Beispielsweise kann durch das Versehen des Bolzens mit Absätzen erreicht werden, dass ein Pressverband nicht über die gesamte Laschenhöhe erzeugt wird.

Der Bolzen kann mit Spielpassung ausgeführt sein, um die Montage zu erleichtern. Denkbar ist jedoch auch, die Bolzenverbindung mit einer Presspassung oder einer Übergangspassung auszuführen. Der mindestens eine Bolzen kann auch mindestens abschnittsweise konisch ausgeführt werden, um die Montage zu erleichtern. Gegebenenfalls kann auch zunächst ein konischer Bolzen durch die Bohrungen getrieben werden, um das Fluchten der Bohrungen zu gewährleisten, worauf anschließend der der Verbindung dienende Bolzen eingetrieben wird.

Es besteht die Möglichkeit, dass eine axiale Sicherung des Bolzens durch Nieten oder durch ein Gewinde oder durch Stifte oder durch Splinte oder durch Sicherungsringe oder durch Scheiben gewährleistet wird.

Es kann vorgesehen sein, dass die beiden Laschenteile im Wesentlichen gleich groß sind, insbesondere wobei die beiden Laschenteile identisch ausgebildet sind. Durch identische ausgebildete Laschenteile ergeben sich Fertigungs- und Logistikerleichterungen, weil keine zwei unterschiedlichen Teile hergestellt und bevorratet werden müssen.

Es besteht die Möglichkeit, dass die Verbindung der Laschenteile in einem Bereich zwischen zwei Gelenken, insbesondere mittig zwischen zwei Gelenken, angeordnet ist. Insbesondere bei einer Anordnung des Verbindungsbereichs in der Mitte zwischen den Gelenken lässt sich der Verbindungsbereich vergleichsweise unabhängig von den Gelenken an die konkreten Anforderungen der Kette anpassen. Alternativ besteht auch die Möglichkeit, die Teilung der Verbindungstelle außermittig vorzusehen. Dabei wird dann in Kauf genommen, dass keine baugleichen Laschenteile vorliegen.

Es kann vorgesehen sein, dass die die Laschenteile aufweisende Lasche im Verbindungsbereich der Laschenteile eine größere Dicke in Kettenquerrichtung als im Gelenkbereich aufweist, insbesondere wobei die Gelenkbereiche einseitig oder beidseitig eine Aussparung aufweisen. Die Aussparungen an den Laschenköpfen beziehungsweise im Gelenkbereich können an die erwartete Belastung der Kette angepasst werden. Weiterhin können die Aussparungen derart gewählt werden, dass keine Störkonturen in der Anlage entstehen.

Es besteht die Möglichkeit, dass die Laschenteile geschmiedete Laschenteile oder nicht geschmiedete Laschenteile sind. Insbesondere können die Laschenteile aus einem Halbzeug in Form von Flachstahl oder Blech gefertigt sein, beispielsweise durch Stanzen und/oder Laserschneiden und/oder Bohren und/oder Fräsen gefertigt sein. Damit ergibt sich eine einfache und kostengünstige Fertigung der Verbindungsteile.

Es kann vorgesehen sein, dass die Buchsenförderkette eine Mehrzahl von Befestigungselementen für die Anbringung zusätzlicher Bauteile umfasst. Weiterhin besteht die Möglichkeit, dass die Buchsenförderkette eine Mehrzahl von Rollen umfasst. Dabei sind die Befestigungselemente und/oder Rollen optional. Sie können bei einem entsprechenden Verwendungszweck der Buchsenförderkette vorgesehen werden.

Es besteht die Möglichkeit, dass die Laschen in Kettenlängsrichtung abwechselnd als Außenlaschen und als Innenlaschen ausgebildet sind, insbesondere wobei die Gelenkbolzen jeweils drehfest mit zwei sich in Kettenquerrichtung einander gegenüberliegenden Außenlaschen und die Gelenkbuchsen jeweils drehfest mit zwei sich in Kettenquerrichtung einander gegenüberliegenden Innenlaschen verbunden sind. Dabei können einzelne der Außenlaschen in zwei Laschenteile unterteilt werden. Alternativ dazu können auch einzelne der Innenlaschen durch Unterteilung in zwei Laschenteile als Verbindungsglied verwendet werden, was bisher nicht möglich war.

Anstelle einer Kette mit abwechselnd angeordneten Außenlaschen und Innenlaschen kann auch eine Kette mit gekröpften Laschen verwendet werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Ansicht eines Details einer ersten Ausführungsform einer erfindungsgemäßen Buchsenförderkette, wobei das Detail keine Lasche zeigt, die zwei Laschenteile aufweist;
- Fig. 2: eine Draufsicht auf ein Detail der Buchsenförderkette gemäß Fig. 1, wobei das Detail zwei Laschen zeigt, die zwei Laschenteile aufweisen;
- Fig. 3: eine perspektivische Ansicht einer zwei Laschenteile aufweisenden Außenlasche der Buchsenförderkette gemäß Fig. 1;
- Fig. 4: eine perspektivische Ansicht einer zwei Laschenteile aufweisenden Außenlasche einer zweiten Ausführungsform einer erfindungsgemäßen Buchsenförderkette;
- Fig. 5: eine perspektivische Ansicht einer zwei Laschenteile aufweisenden Außenlasche einer dritten Ausführungsform einer erfindungsgemäßen Buchsenförderkette;
- Fig. 6: eine Draufsicht auf die dritte Ausführungsform einer erfindungsgemäßen Buchsenförderkette mit der Außenlasche gemäß Fig. 5;
- Fig. 7: eine perspektivische Ansicht einer zwei Laschenteile aufweisenden Außenlasche einer vierten Ausführungsform einer erfindungsgemäßen Buchsenförderkette;
- Fig. 8: eine Draufsicht auf die vierte Ausführungsform einer erfindungsgemäßen Buchsenförderkette mit der Außenlasche gemäß Fig. 7;
- Fig. 9: eine Draufsicht auf eine fünfte Ausführungsform einer erfindungsgemäßen Buchsenförderkette.

In den Figuren werden gleiche oder funktional gleiche Teile mit gleichen Bezugszeichen versehen.

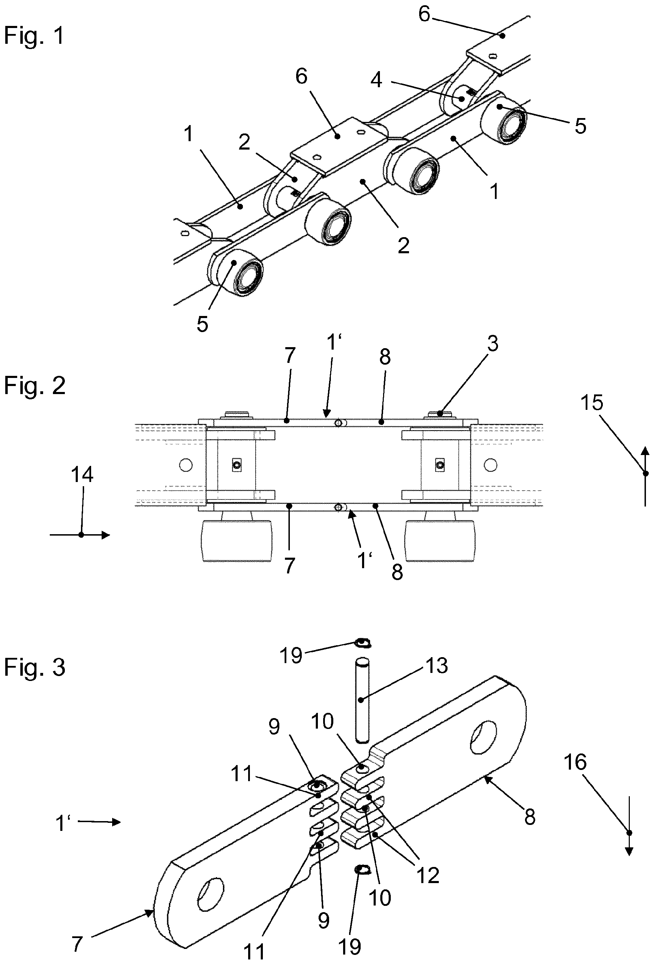

Die in Fig. 1 und Fig. 2 abgebildete Ausführungsform einer erfindungsgemäßen Buchsenförderkette umfasst eine Mehrzahl von als Außenlaschen 1 ausgebildete Laschen, von denen jeweils zwei in Kettenquerrichtung 15 (siehe den Pfeil in Fig. 2) einander gegenüberliegen. Die Ausführungsform umfasst weiterhin eine Mehrzahl von als Innenlaschen 2 ausgebildete Laschen von denen ebenfalls jeweils zwei in Kettenquerrichtung 15 einander gegenüberliegen. Die Ausführungsform umfasst weiterhin eine Mehrzahl von Gelenkbolzen 3, die jeweils drehfest mit zwei sich in Kettenquerrichtung einander gegenüberliegenden Außenlaschen 1 verbunden sind. Die Ausführungsform umfasst weiterhin eine Mehrzahl von Gelenkbuchsen 4, die jeweils drehfest mit zwei sich in Kettenquerrichtung einander gegenüberliegenden Innenlaschen 2 verbunden sind.

Eine jede der Gelenkbuchsen 4 umgibt dabei abschnittsweise einen der Gelenkbolzen 3. Die Gelenkbuchsen 4 und die Gelenkbolzen 3 bilden jeweils in an sich bekannter Weise ein Gelenk. Bei einer Bewegung des Gelenks finden eine Drehung der Gelenkbuchse 4 relativ zu dem Gelenkbolzen 3 und ein Verschwenken der Innenlaschen 2 relativ zu den Außenlaschen 1 statt.

Die in Fig. 1 abgebildete Ausführungsform einer erfindungsgemäßen Buchsenförderkette umfasst eine Mehrzahl von Rollen 5 an der Außenseite der Buchsenförderkette sowie eine Mehrzahl von Befestigungselementen 6 für die Anbringung zusätzlicher, nicht abgebildeter Bauteile. Die Befestigungselemente 6 sind dabei an einander gegenüberliegenden Innenlaschen 2 angebracht. Die Rollen 5 können auch in Kettenquerrichtung zwischen den Laschen angeordnet sein.

Es besteht durchaus die Möglichkeit, bei einer erfindungsgemäßen Buchsenförderkette keine Rollen und/oder keine Befestigungselemente vorzusehen.

Fig. 2 und Fig. 3 zeigen eine beziehungsweise zwei als Verbindungsglied dienende Außenlaschen 1', die zwei miteinander verbundene Laschenteile 7, 8 umfassen. Für die Verbindung der Laschenteile 7, 8 ist ein Bolzen 13 vorgesehen, der sich in einer Richtung 16 (siehe den Pfeil in Fig. 3), die senkrecht zur Laschenlängsrichtung 14 (siehe den Pfeil in Fig. 2) und senkrecht zur Kettenquerrichtung 15 ist, durch Bohrungen 9, 10 in den Laschenteilen 7, 8 erstreckt.

Das erste Laschenteil 7 umfasst dazu vier erste Abschnitte 11, die in der Richtung 16 zueinander beabstandet sind und jeweils eine Bohrung 9 für den Bolzen 13 aufweisen. Die ersten Abschnitte 11 sind endseitig auf der dem zweiten Laschenteil 8 zugewandten Seite angeordnet. Das zweite Laschenteil 8 umfasst vier zweite Abschnitte 12, die ebenfalls in der Richtung 16 zueinander beabstandet sind und jeweils eine Bohrung 10 für den Bolzen 13 aufweisen. Die zweiten Abschnitte 12 sind endseitig auf der dem ersten Laschenteil 7 zugewandten Seite angeordnet.

Dabei entsprechen die Abstände der ersten Abschnitte 11 des ersten Laschenteils 7 in der Richtung 16 der Dicke der zweiten Abschnitte 12 des zweiten Laschenteils 8 in der Richtung 16. Weiterhin entsprechen die Abstände der zweiten Abschnitte 12 des zweiten Laschenteils 8 in der Richtung 16 der Dicke der ersten Abschnitte 11 des ersten Laschenteils 7 in der Richtung 16. Dadurch lassen sich die einander zugewandten Enden der Laschenteile 7, 8 ineinanderschieben bis die Bohrungen 9, 10 der ersten und zweiten Abschnitte 11, 12 der Laschenteile 7, 8 in der Richtung 16 miteinander fluchten.

Im verbundenen Zustand der Laschenteile 7, 8 überlappen die ersten Abschnitte 11 die zweiten Abschnitte 12, so dass sich nach Einbringung des Bolzens 13 in die Bohrungen 9, 10 der ersten und der zweiten Abschnitte 11, 12 eine mehrschnittige Bolzenverbindung zwischen den beiden Laschenteilen 7, 9 ergibt. Es besteht durchaus die Möglichkeit, mehr oder weniger überlappende Abschnitte 11, 12 vorzusehen, wobei die Anzahl der einander überlappenden Abschnitte 11, 12 je nach Größe der zu übertragenden Kraft gewählt werden kann.

Die Verbindung zweier separater Kettenstränge kann dadurch erfolgen, dass auf jeder Seite der Kette jeweils die Abschnitte 11, 12 der ersten und der zweiten Laschenteile 7, 8 ineinander geschoben und in dieser Position durch Einbringung des Bolzens 13 fixiert werden.

In Fig. 3 sind zwei Sicherungsringe 19 für die axiale Sicherung des Bolzens 13 ersichtlich. Es besteht alternativ die Möglichkeit, eine axiale Sicherung des Bolzes 13 durch Nieten oder durch ein Gewinde oder durch Stifte oder durch Splinte oder durch Scheiben zu realisieren.

Der in Fig. 3 abgebildete Bolzen 13 ist zylindrisch ausgebildet. Es kann durchaus vorgesehen sein, dass der Bolzen 13 nicht abgebildete Absätze aufweist. Das Versehen des Bolzens 13 mit Absätzen kann unabhängig von der Ausführung der Passung die Montage erleichtern. Beispielsweise kann durch das Versehen des Bolzens 13 mit Absätzen erreicht werden, dass ein Pressverband nicht über die gesamte Laschenhöhe erzeugt wird.

Alternativ kann der Bolzen 13 als Spannstift oder als Passschraube ausgebildet sein.

Der Bolzen 13 kann mit Spielpassung ausgeführt sein, um die Montage zu erleichtern. Der Bolzen 13 kann auch abschnittsweise konisch ausgeführt werden, um die Montage zu erleichtern. Gegebenenfalls kann auch zunächst ein konischer Bolzen durch die Bohrungen 9, 10 getrieben werden, um das Fluchten der Bohrungen 9, 10 zu gewährleisten, worauf anschließend der der Verbindung dienende Bolzen 13 eingetrieben wird.

Es besteht durchaus auch die Möglichkeit mehrere, insbesondere in Laschenlängsrichtung 14 zueinander beabstandete, Bolzen 13 vorzusehen.

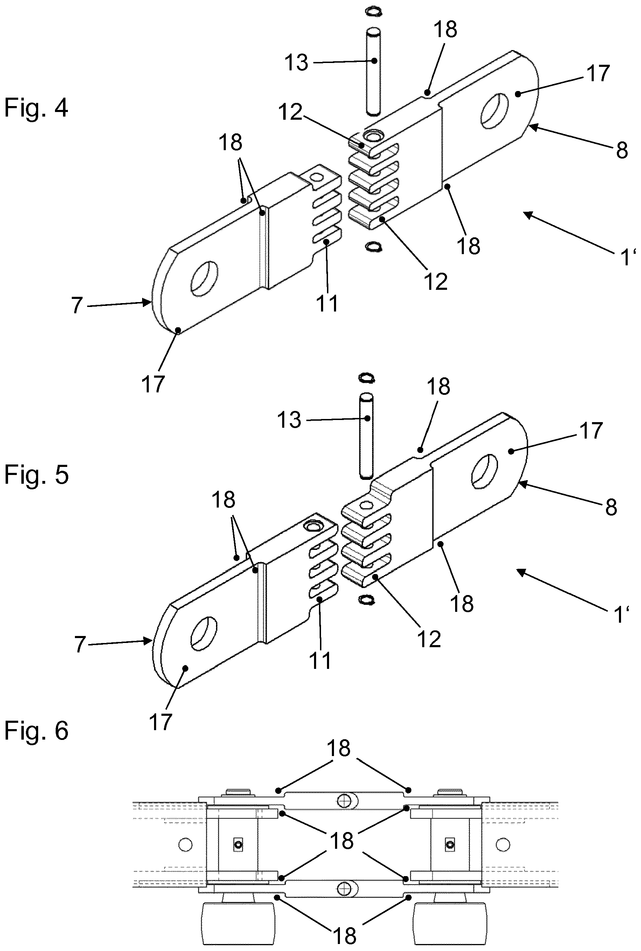

Die in Fig. 3 abgebildeten Laschenteile 7, 8 sind identisch ausgebildet und weisen insbesondere jeweils vier endseitige Abschnitte 11, 12 auf. Fig. 4 zeigt ein Ausführungsbeispiel bei dem das erste Laschenteil 7 vier erste Abschnitte 11 und das zweite Laschenteil 8 fünf zweite Abschnitte 12 umfasst. Dadurch sind die Laschenteile 7, 8 nicht mehr identisch.

Bei der Ausführungsform gemäß den Fig. 1 bis Fig. 3 weisen die als Verbindungsglied dienenden Außenlaschen 1' über ihre Längserstreckung eine gleichbleibende Dicke auf.

Bei den Ausführungsformen gemäß den Fig. 4 bis 9 weisen die als Verbindungsglied dienenden Außenlaschen 1' im Verbindungsbereich der Laschenteile 7, 8 eine größere Dicke in Kettenquerrichtung 15 auf als im Gelenkbereich. Dies kann insbesondere dadurch realisiert werden, dass die Gelenkbereiche beziehungsweise die Laschenköpfe 17 einseitig oder beidseitig eine Aussparung 18 aufweisen.

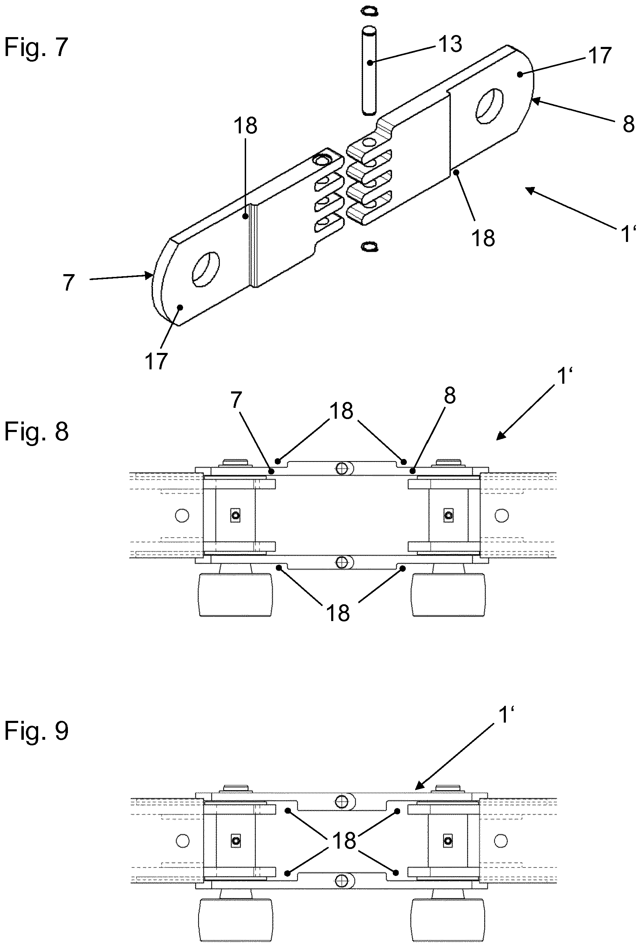

Die Ausführungsformen gemäß den Fig. 4 bis Fig. 6 weisen beidseitige Aussparungen 18 an den Laschenköpfen 17 auf, wohingegen die Ausführungsformen gemäß den Fig. 7 bis Fig. 9 lediglich einseitige Aussparungen aufweisen. Dabei ist die Aussparung bei der Ausführungsform gemäß Fig. 8 außen, wohingegen sie bei der Ausführungsform gemäß Fig. 9 innen angeordnet ist.

Die Aussparungen 18 an den Laschenköpfen 17 beziehungsweise im Gelenkbereich können an die erwartete Belastung der Kette angepasst werden. Weiterhin können die Aussparungen 18 derart gewählt werden, dass keine Störkonturen in der Anlage entstehen. Durch die Aussparungen 18 können die Verbindungsbereiche der Laschenteile 7, 8 unabhängig von der Gestaltung des Gelenkbereichs eine geeignete Dicke aufweisen, um angesichts der zu erwartenden Kräfte eine stabile Verbindung zu gewährleisten

Ein Verfahren zu Herstellung der Laschenteile 7, 8 kann vorsehen, dass als Vormaterial ein Halbzeug in Form von Flachstahl oder Blech verwendet wird. Die Laschenteile 7, 8 werden aus dem Halbzeug gefertigt, insbesondere durch Stanzen und/oder durch Laserschneiden aber auch durch Bohren und/oder durch Fräsen.

Alternativ können die Laschenteile 7, 8 beziehungsweise das Halbzeug für die Fertigung der Laschenteile 7, 8 auch durch andere Verfahren wie Schmieden oder Gießen oder dergleichen erzeugt werden.

## Patentansprüche

1. Buchsenförderkette, umfassend
- eine Mehrzahl von Laschen, von denen jeweils zwei in Kettenquerrichtung (15) einander gegenüberliegen,
- eine Mehrzahl von Gelenkbolzen (3), die jeweils drehfest mit zwei sich in Kettenquerrichtung (15) einander gegenüberliegenden Laschen verbunden sind,
- eine Mehrzahl von Gelenkbuchsen (4), die jeweils drehfest mit zwei sich in Kettenquerrichtung (15) einander gegenüberliegenden Laschen verbunden sind, wobei jeweils eine Gelenkbuchse (4) einen Gelenkbolzen (3) zumindest abschnittsweise umgibt und mit dem Gelenkbolzen (3) ein Gelenk bildet,
**dadurch gekennzeichnet, dass** mindestens zwei der Laschen, insbesondere zwei einander gegenüberliegende Laschen, jeweils zwei Laschenteile (7, 8) aufweisen, die im Gebrauchszustand der Buchsenförderkette miteinander verbunden sind, wobei jeweils mindestens ein Bolzen (13) vorgesehen ist, der die Laschenteile (7, 8) miteinander verbindet.

2. Buchsenförderkette nach Anspruch 1, **dadurch gekennzeichnet, dass** die durch den mindestens einen Bolzen (13) hergestellte Verbindung eine mehrschnittige Bolzenverbindung ist.

3. Buchsenförderkette nach einem der Ansprüche 1 oder 2,
**dadurch gekennzeichnet, dass** das erste der Laschenteile (7, 8) mindestens einen mit einer Bohrung (9) versehenen ersten Abschnitt (11), vorzugsweise mehrere, zueinander beabstandete erste Abschnitte (11), aufweist, der sich im Gebrauchszustand der Buchsenförderkette endseitig in Richtung auf das zweite der Laschenteile (7, 8) erstreckt, und dass das zweite Laschenteil (8) mindestens einen mit einer Bohrung (10) versehenen zweiten Abschnitt (12), vorzugsweise mehrere, zueinander beabstandete zweite Abschnitte (12), aufweist, der sich im Gebrauchszustand der Buchsenförderkette endseitig in Richtung auf das erste Laschenteile (7) erstreckt, wobei im verbundenen Zustand der Laschenteile (7, 8) der mindestens eine erste Abschnitt (11) den mindestens einen zweiten Abschnitt (12) überlappt und wobei sich der mindestens eine Bolzen (13) durch die Bohrungen (9, 10) des mindestens einen ersten und des mindestens einen zweiten Abschnitts (11, 12) hindurcherstreckt.

4. Buchsenförderkette nach Anspruch 3, **dadurch gekennzeichnet, dass** sich der mindestens eine Bolzen (13) im Gebrauchszustand der Buchsenförderkette in einer Richtung (16) durch die Bohrungen (9, 10) der einander überlappenden Abschnitte (11, 12) erstreckt, die zu der Laschenlängsrichtung (14) und zu der Kettenquerrichtung (15) senkrecht ist.

5. Buchsenförderkette nach einem der Ansprüche 1 bis 4, **dadurch gekennzeichnet, dass** der mindestens eine Bolzen (13) Absätze aufweist und/oder dass der mindestens eine Bolzen als Spannstift und/oder als Passschraube ausgebildet ist.

6. Buchsenförderkette nach einem der Ansprüche 1 bis 5, **dadurch gekennzeichnet, dass** die beiden Laschenteile (7, 8) im Wesentlichen gleich groß sind, insbesondere wobei die beiden Laschenteile (7, 8) identisch ausgebildet sind.

7. Buchsenförderkette nach einem der Ansprüche 1 bis 6, **dadurch gekennzeichnet, dass** die Verbindung der Laschenteile (7, 8) in einem Bereich zwischen zwei Gelenken, insbesondere mittig zwischen zwei Gelenken, angeordnet ist.

8. Buchsenförderkette nach einem der Ansprüche 1 bis 7, **dadurch gekennzeichnet, dass** die die Laschenteile (7, 8) aufweisende Lasche im Verbindungsbereich der Laschenteile (7, 8) eine größere Dicke in Kettenquerrichtung (15) als im Gelenkbereich aufweist, insbesondere wobei die Gelenkbereiche einseitig oder beidseitig eine Aussparung (18) aufweisen.

9. Buchsenförderkette nach einem der Ansprüche 1 bis 8, **dadurch gekennzeichnet, dass** die Laschenteile (7, 8) geschmiedete Laschenteile (7, 8) oder nicht geschmiedete Laschenteile (7, 8) sind.

10. Buchsenförderkette nach einem der Ansprüche 1 bis 9, **dadurch gekennzeichnet, dass** die Laschenteile (7, 8) aus einem Halbzeug in Form von Flachstahl oder Blech gefertigt sind, beispielsweise durch Stanzen und/oder Laserschneiden und/oder Bohren und/oder Fräsen gefertigt sind.

11. Buchsenförderkette nach einem der Ansprüche 1 bis 10,
**dadurch gekennzeichnet, dass** die Buchsenförderkette eine Mehrzahl von Befestigungselementen (6) für die Anbringung zusätzlicher Bauteile umfasst.

12. Buchsenförderkette nach einem der Ansprüche 1 bis 11,
**dadurch gekennzeichnet, dass** die Buchsenförderkette eine Mehrzahl von Rollen (5) umfasst.

13. Buchsenförderkette nach einem der Ansprüche 1 bis 11,
**dadurch gekennzeichnet, dass** die Laschen in Kettenlängsrichtung abwechselnd als Außenlaschen (1, 1') und als Innenlaschen (2) ausgebildet sind, insbesondere wobei die Gelenkbolzen (3) jeweils drehfest mit zwei sich in Kettenquerrichtung (15) einander gegenüberliegenden Außenlaschen (1) und die Gelenkbuchsen (4) jeweils drehfest mit zwei sich in Kettenquerrichtung (15) einander gegenüberliegenden Innenlaschen (2) verbunden sind.

## Claims

1. Link-plate chain, comprising
- a plurality of tabs, of which respectively two are situated opposite one another in transverse direction of the chain (15),
- a plurality of hinge bolts (3) which are connected in each case in a non-rotational manner with two tabs which are situated opposite one another in transverse direction of the chain (15),
- a plurality of hinge bushings (4), which are connected in each case in a non-rotational manner with two tabs which are situated opposite one another in transverse direction of the chain (15), wherein in each case one hinge bushing (4) surrounds a hinge bolt (3) at least in portions and forms with the hinge bolt (3) a hinge,
**characterised in that** at least two of the tabs, in particular two tabs situated opposite one another, have in each case two tab parts (7, 8), which in the use state of the link-plate chain are connected to one another, wherein in each case at least one bolt (13) is provided which connects the tab parts (7, 8) to one another.

2. Link-plate chain according to claim 1, **characterised in that** the connection created by the at least one bolt (13) is a multi-shear bolt connection.

3. Link-plate chain according to any of claims 1 or 2, **characterised in that** the first of the tab parts (7, 8) has at least one first portion (11) furnished with a bore (9), preferably a plurality of first portions (11) spaced from one another, which at its end extends in the use state of the link-plate chain in the direction towards the second of the tab parts (7, 8), and that the second tab part (8) has at least one second portion (12) furnished with a bore (10), preferably a plurality of second portions (12) spaced from one another, which extends at its end in the use state of the link-plate chain in the direction towards the first tab part (7), wherein in the connected state of the tab parts (7, 8) the at least one first portion (11) overlaps the at least one second portion (12) and wherein the at least one bolt (13) extends through the bores (9, 10) of the at least one first and of the at least one second portion (11, 12).

4. Link-plate chain according to claim 3, **characterised in that** in the use state of the link-plate chain the at least one bolt (13) extends in a direction (16) through the bores (9, 10) of the portions (11, 12) overlapping one another, which direction is perpendicular to the longitudinal direction of the tabs (14) and to the transverse direction of the chain (15).

5. Link-plate chain according to any of claims 1 to 4, **characterised in that** the at least one bolt (13) has steps and/or that the at least one bolt is designed as a tension pin and/or as a fit bolt.

6. Link-plate chain according to any of claims 1 to 5, **characterised in that** the two tab parts (7, 8) are substantially of equal size, in particular wherein the two tab parts (7, 8) are identical in design.

7. Link-plate chain according to any of claims 1 to 6, **characterised in that** the connection of the tab parts (7, 8) is arranged in a region between two hinges, in particular centrally between two hinges.

8. Link-plate chain according to any of claims 1 to 7, **characterised in that** the tab having the tab parts (7, 8) has in the connection region of the tab parts (7, 8) a greater thickness in transverse direction of the chain (15) than in the hinge region, in particular wherein the hinge regions have a cut-out (18) on one side or on both sides.

9. Link-plate chain according to any of claims 1 to 8, **characterised in that** the tab parts (7, 8) are forged tab parts (7, 8) or non-forged tab parts (7, 8).

10. Link-plate chain according to any of claims 1 to 9, **characterised in that** the tab parts (7, 8) are produced from a semi-finished product in the form of strip steel or sheet metal, for example by punching and/or laser cutting and/or drilling and/or milling.

11. Link-plate chain according to any of claims 1 to 10, **characterised in that** the link-plate chain has a plurality of fastening elements (6) for the mounting of additional components.

12. Link-plate chain according to any of claims 1 to 11, **characterised in that** the link-plate chain comprises a plurality of rollers (5).

13. Link-plate chain according to any of claims 1 to 11, **characterised in that** the tabs are formed in the longitudinal direction of the chain alternately as outer tabs (1, 1') and as inner tabs (2), in particular wherein the hinge bolts (3) are connected in each case in a non-rotational manner with two outer tabs (1) situated opposite one another in transverse direction of the chain (15) and the hinge bushings (4) are connected in each case in a non-rotational manner with two inner tabs (2) situated opposite one another in transverse direction of the chain (15).

## Revendications

1. Chaîne transporteuse à douilles, comprenant
- une pluralité de maillons, dont respectivement deux se font face dans la direction transversale de la chaîne (15),
- une pluralité d'axes d'articulation (3), qui sont respectivement connectés de manière non rotative à deux maillons se faisant face l'un à l'autre dans la direction transversale de la chaîne (15),
- une pluralité de douilles d'articulation (4), qui sont respectivement connectées de manière non rotative à deux maillons se faisant face l'un à l'autre dans la direction transversale de la chaîne (15), dans laquelle une douille d'articulation (4) entoure respectivement un axe d'articulation (3) au moins par sections et forme une articulation avec l'axe d'articulation (3),
**caractérisée en ce qu'**au moins deux des maillons, en particulier deux maillons se faisant face l'un à l'autre, présentent respectivement deux parties de maillon (7, 8), qui sont connectées l'une à l'autre à l'état d'utilisation de la chaîne transporteuse à douilles, dans laquelle au moins un axe (13) est respectivement prévu, qui connecte les parties de maillon (7, 8) l'une à l'autre.

2. Chaîne transporteuse à douilles selon la revendication 1, **caractérisée en ce que** la connexion réalisée par l'au moins un axe (13) est une connexion d'axe à section multiple.

3. Chaîne transporteuse à douilles selon l'une quelconque des revendications 1 ou 2, **caractérisée en ce que** la première des parties de maillon (7, 8) présente au moins une première section (11) dotée d'un alésage (9), de préférence plusieurs premières sections (11) espacées les unes des autres, qui, à l'état d'utilisation de la chaîne transporteuse à douilles, s'étend à l'extrémité en direction de la seconde des parties de maillon (7, 8), et **en ce que** la seconde partie de maillon (8) présente au moins une seconde section (12) dotée d'un alésage (10), de préférence plusieurs secondes sections (12) espacées les unes des autres, qui, à l'état d'utilisation de la chaîne transporteuse à douilles, s'étend à l'extrémité en direction de la première partie de maillon (7), dans laquelle, à l'état connecté des parties de maillon (7, 8), l'au moins une première section (11) chevauche l'au moins une seconde section (12), et dans laquelle l'au moins un axe (13) s'étend à travers les alésages (9, 10) de l'au moins une première et de l'au moins une seconde section (11, 12).

4. Chaîne transporteuse à douilles selon la revendication 3, **caractérisée en ce que** l'au moins un axe (13), à l'état d'utilisation de la chaîne transporteuse à douilles, s'étend à travers les alésages (9, 10) des sections se chevauchant les unes les autres (11, 12) dans une direction (16) perpendiculaire à la direction longitudinale de maillon (14) et à la direction transversale de la chaîne (15).

5. Chaîne transporteuse à douilles selon l'une quelconque des revendications 1 à 4, **caractérisée en ce que** l'au moins un axe (13) présente des talons et/ou **en ce que** l'au moins un axe est conçu en tant que goupille de serrage et/ou en tant que vis de calibrage.

6. Chaîne transporteuse à douilles selon l'une quelconque des revendications 1 à 5, **caractérisée en ce que** les deux parties de maillon (7, 8) sont sensiblement de taille égale, en particulier dans laquelle les deux parties de maillon (7, 8) sont conçues de façon identique.

7. Chaîne transporteuse à douilles selon l'une quelconque des revendications 1 à 6, **caractérisée en ce que** la connexion des parties de maillon (7, 8) est disposée dans une zone entre deux articulations, en particulier au centre entre deux articulations.

8. Chaîne transporteuse à douilles selon l'une quelconque des revendications 1 à 7, **caractérisée en ce que** le maillon présentant les parties de maillon (7, 8) présente une plus grande épaisseur dans la direction transversale de la chaîne (15) dans la zone de connexion des parties de maillon (7, 8) que dans la zone d'articulation, en particulier dans laquelle les zones d'articulation présentent un évidement (18) d'un côté ou des deux côtés.

9. Chaîne transporteuse à douilles selon l'une quelconque des revendications 1 à 8, **caractérisée en ce que** les parties de maillon (7, 8) sont des parties de maillon forgées (7, 8) ou des parties de maillon non forgées (7, 8).

10. Chaîne transporteuse à douilles selon l'une quelconque des revendications 1 à 9, **caractérisée en ce que** les parties de maillon (7, 8) sont réalisées à partir d'un produit semi-fini sous forme d'acier plat ou de tôle, par exemple sont réalisées par poinçonnage et/ou découpe laser et/ou perçage et/ou fraisage.

11. Chaîne transporteuse à douilles selon l'une quelconque des revendications 1 à 10, **caractérisée en ce que** la chaîne transporteuse à douilles comprend une pluralité d'éléments de fixation (6) pour l'application de pièces supplémentaires.

12. Chaîne transporteuse à douilles selon l'une quelconque des revendications 1 à 11, **caractérisée en ce que** la chaîne transporteuse à douilles comprend une pluralité de rouleaux (5).

13. Chaîne transporteuse à douilles selon l'une quelconque des revendications 1 à 11, **caractérisée en ce que** les maillons dans la direction longitudinale de la chaîne sont conçus à tour de rôle en tant que maillons extérieurs (1, 1') et en tant que maillons intérieurs (2), en particulier dans laquelle les axes d'articulation (3) sont respectivement connectés de manière non rotative à deux maillons extérieurs (1) se faisant face l'un à l'autre dans la direction transversale de la chaîne (15) et les douilles d'articulation (4) sont respectivement connectées de manière non rotative à deux maillons intérieurs (2) se faisant face l'un à l'autre dans la direction transversale de la chaîne (15).
